# EUROPÄISCHE PATENTSCHRIFT

(11) **EP 3 211 396 B1**
(45) Veröffentlichungstag und Bekanntmachung des Hinweises auf die Patenterteilung: **19.06.2019**
(21) Anmeldenummer: 17156475.0
(22) Anmeldetag: 16.02.2017
(51) Int. Cl.: G01M 5/00, G01L 1/20, G01L 1/22

(54) **SENSOR ZUR INTEGRALEN ODER ORTSAUFGELÖSTEN MESSUNG VON DEHNUNGEN BASIEREND AUF VORGESCHÄDIGTEN KOHLEFASERN**
SENSOR FOR INTEGRAL OR SPATIALLY RESOLVED MEASURING OF EXTENSIONS BASED ON PRE-DAMAGED CARBON FIBRES
CAPTEUR DE MESURE INTÉGRALE OU À RÉSOLUTION SPATIALE D'ALLONGEMENTS SUR LA BASE DE FIBRES DE CARBONE DÉJÀ ENDOMMAGÉES

(30) Priorität: 23.02.2016 DE 102016202769
(43) Veröffentlichungstag der Anmeldung: 30.08.2017
(73) Patentinhaber: Technische Universität Dresden, 01069 Dresden (DE)
(72) Erfinder: Kostka, Pawel, 01307 Dresden (DE); Höhne, Robin, 01097 Dresden (DE); Modler, Niels, 09212 Limbach-Oberfrohna (DE)
(74) Vertreter: Kailuweit & Uhlemann Patentanwälte Partnerschaft mbB

(56) Entgegenhaltungen:
- DE-A1-102004 008 432
- DE-A1-102008 058 882
- DE-A1-102013 212 036
- US-A1- 2005 284 232
- US-B1- 8 451 013

## Beschreibung

Gegenstand der vorliegenden Erfindung ist ein Sensor, der definiert vorgeschädigte Kohlefasern in einer Kunststoffmatrix vorsieht und der integralen oder einer ortsauflösenden Bestimmung von Dehnungen und Schädigungen des Materials auf dem bzw. in dem er angeordnet ist, dient. Darüber hinaus wird ein Verfahren zur Herstellung eines derartigen Sensors angegeben. Vorteilhaft erfolgt der Einsatz des Sensors in Faserverbundwerkstoffen in Bauteilen, die Dehnungsbeanspruchungen ausgesetzt sind.

Faserverbundwerkstoffe, insbesondere Faser-Kunststoff-Verbundmaterialien - FKV - haben sich in vielen Bereichen der Industrie aufgrund ihrer hervorragenden Eigenschaften etabliert. Besonders ihre hohe Festigkeit und Steifigkeit sowie eine gute Korrosions- und Chemikalienbeständigkeit sprechen für den Einsatz von Faserverbundmaterialien. Dementsprechend hat sich der Einsatz der FKV in hoch beanspruchten Bauteilen wie Flugzeugrümpfen, Triebwerksschaufeln oder Maschinenteilen in den letzten Jahren immer stärker durchgesetzt.

Im Betrieb werden diese hoch belasteten Bauteile unterschiedlichsten Beanspruchungen durch Umwelteinflüsse, dynamische Lasten und äußere Einwirkungen, wie bspw. Verschleiß oder Einschlägen (Impact) ausgesetzt. Bei vielen sicherheitsrelevanten Bauteilen wird daher die Entwicklung bauteilintegrierter Messsysteme oder Sensoren zur Erfassung derartiger Beanspruchungen angestrebt.

Bei FKV kann über den Schichtaufbau ein gutmütiges Schädigungsverhalten, d.h. der Werkstoff versagt nicht unvermittelt, eingestellt werden. Dabei ist eine tolerierbare Schädigungszunahme zulässig, die jedoch einer intensiven Überwachung bedarf. Während des sukzessiven Schädigungsfortschrittes ist dazu die Detektion und Lokalisierung der vorhandenen Schädigungen notwendig, um das Ausfallrisiko fortlaufend abschätzen zu können.

Bekannte Lösungen setzten als strukturintegrierte Sensoren bspw. Dehnungsmessstreifen, Faser-Bragg-Gitter oder Beschleunigungsaufnehmer ein. Nachteilig daran ist, dass diese Sensoren häufig Fremdkörper in der Struktur darstellen, die eine Schwächung und Fehleranfälligkeit einbringen. In der Entwicklung befinden sich mit CNT (carbon nanotubes) funktionalisierte Glasfasern. Lokale Dehnungen führen bei diesen Fasermaterialien zu messbaren Widerstandsänderungen durch Umlagerungen im CNT-Netzwerk. Diese funktionalisierten Glasfasern erlauben eine nahezu störungsfreie Strukturintegration.

Zur Identifizierung des Strukturzustandes werden in der Praxis gegenwärtig in regelmäßigen Intervallen Inspektionen, visuell oder mittels zerstörungsfreier Prüfverfahren (ZfP), bspw. mittels Ultraschall- und radiographischer Verfahren, durchgeführt. Die ZfP sind direkte Verfahren, die eine unmittelbare Schadensbeschreibung (Schädigungsgröße, -ort und -art) durch einen menschlichen Operator aus den zumeist bildhaft dargestellten Messdaten erlauben.

Eine weitere Lösungsalternative liegt in der Anwendung von Diagnostiksystemen zur Zustandsüberwachung. Der größte Vorteil gegenüber den ZfP liegt in der Möglichkeit, die Strukturen kontinuierlich, während des Betriebs (Online), überwachen zu können. Dadurch können überflüssige Inspektionen vermieden werden, was eine deutliche Reduzierung der Inspektions-/Wartungskosten sowie eine Erhöhung der Standzeiten zur Folge hat. Derartige Online-Systeme befinden sich derzeit in der Entwicklungsphase und sind nur vereinzelt in der Praxis getestet worden. Im Gegensatz zu den gängigen ZfP-Verfahren basieren die meisten Diagnostiksysteme auf indirekten Verfahren zur Schadensbeschreibung. Dabei werden physikalische Größen (Symptome) betrachtet, von denen bekannt ist, dass sie sich bei Vorhandensein einer Schädigung verändern. Es existieren zahlreiche Verfahren, die bspw. Dehnungsfelder, modale Parameter (Eigenfrequenzen und -formen sowie modale Dämpfungen) als schadensabhängige Struktureigenschaften betrachten. Unabhängig von der Architektur des Messsystems erfolgt die Zustandsbestimmung überwiegend auf Basis einer approximativen inversen Relation, die den Zusammenhang zwischen Werten messbarer Symptome und dem vorliegenden Strukturzustand beschreibt.

Es wurden erste Forschungen an Sensortypen bekannt, die auf dem in der Elektrotechnik etablierten Messverfahren der elektrischen Zeitbereichsreflektometrie (EZBR) basieren. In den bekannten Arbeiten wird die Dehnungsverteilung entlang des Sensors, basierend auf Lauflängen und Reflexionscharakteristika elektrischer Signale, ermittelt. Dabei werden lokale Dehnungsüberhöhungen ausgewertet, um örtlich auftretende Schädigungen zu identifizieren. Eine selektive Anpassung der Architektur und der Materialien des Sensors an das Schädigungsverhalten des Grundmaterials wird dabei jedoch nicht realisiert.

Die US 2011/0107843A1 beschreibt Sensoren aus Fasern, die in die Faserverbundstruktur integriert sind. Die Fasern sollen leitend sein. Als geeignet werden neben metallischen Fasern auch Kohlenstoffasern angegeben. Fasern aus nichtleitenden Materialien (bspw. Glasfasern) sollen einen leitenden Überzug erhalten. Schädigungspunkte des Faserverbundmaterials sollen aufgrund der Unterbrechung von Strompfaden oder mittels elektrischer Zeitbereichsreflektometrie bestimmt werden. Als besonders geeignet werden Fasern mit piezoresistiven Eigenschaften genannt.

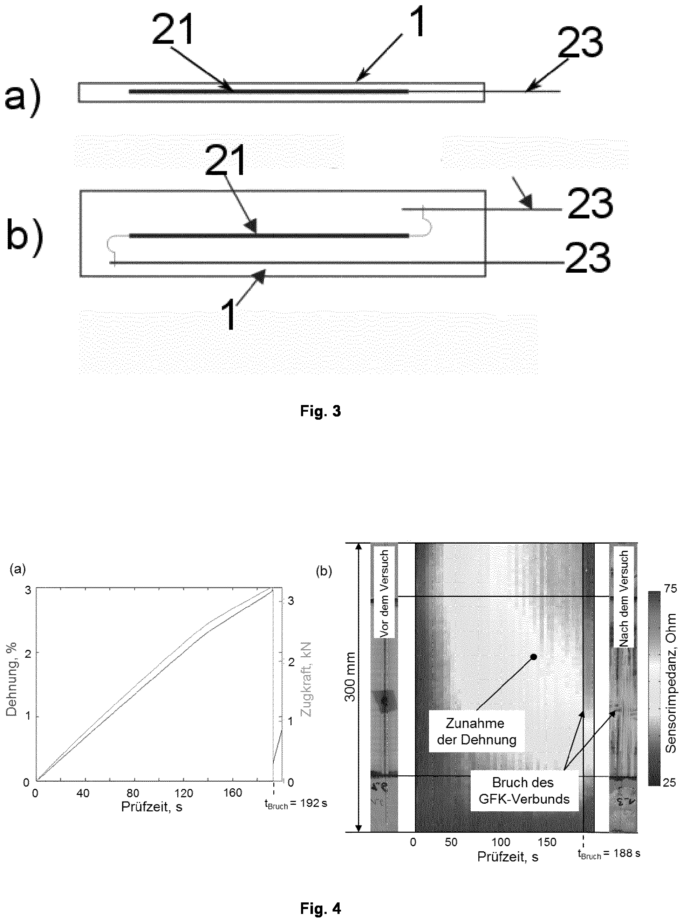

Bei der Untersuchung von Materialien, die für strukturintegrierte Sensoren geeignet sein könnten, sind Kohlefasern (Carbonfasern) in den Blickpunkt der Forschung gelangt. Bekannt von Kohlefasern ist ein piezoresistives Verhalten, das für die entsprechenden Dehnungs- oder Druckmessungen geeignet sein könnte. So untersuchen Horoschenkoff et. al. (Alexander Horoschenkoff; Christian Christner: Carbon fibre sensor: Theory and application. InTech 2012, DOI: 10.5772/50504) die Abhängigkeit des piezoresistiven Verhaltens von der Dehnung. In Abschnitt 4 dieses Artikels wird dargestellt, dass Kohlefasern geeignet sind, die angelegte elastische Dehnung mittels der Änderung des elektrischen Widerstandes zu messen. Hier erfährt der Fachmann, dass es essentiell ist, dass die Kohlefasern im Bereich der elastischen Dehnung und damit schadensfrei, betrieben werden müssen. Figur 4 der Publikation von Horoschenkoff et. al. zeigt für verschiedene Kohlefaserarten das Verhältnis des spezifischen Widerstandes zum Elastizitätsmodul der Kohlefaserarten. Dieser Figur 4 entnimmt der Fachmann, dass insbesondere HT-Fasern aufgrund der großen Änderung des spezifischen Widerstandes bei geringen Dehnungen für Sensoranwendungen geeignet sind.

Da Kohlefasern bereits bei geringen Dehnungen brechen, sind die Einsatzmöglichkeiten dieser Fasern als werkstoffimmanente Sensoren bei Werkstoffen, die größere Dehnungen erfahren, begrenzt.

Abry et. al. beschreiben (J.C. Abry, S. Bochard, A. Chateauminois, M. Salvia, G. Giraud: In situ detection of damage in CFRP laminates by electricalresistance measurements., Composites Science and Technology 59 (1999) 925±935), dass die Widerstandsänderung von Kohlefaserfilamenten, die teilweise über ihre Bruchdehnung hinaus belastet werden, durch das Öffnen und Schließen von Bruchstellen im Dehnungsverlauf beeinflusst wird. Ergebnisse weiterführender Untersuchungen haben Abry et. al. (J .C. Abry, Y.K. Choi, A. Chateauminois, B. Dalloz, G. Giraud, M. Salvia: In-situ monitoring of damage in CFRP laminates by means of AC, Composites Science and Technology 61 (2001) 855-864) beschrieben. Auch hier wird nochmals auf die Möglichkeit des Schließens von Bruchstellen der Kohlefasern bei nachlassender Zugspannung hingewiesen.

Durch H. Schmutzler et.al. (H. Schmutzler, J. Popp, E. Büchter, H. Wittich, K. Schulte, B. Fiedler: Improvement of bonding strengt hof scarf-bonded carbon fibre/epoxy laminates by Nd:YAG laser surface activation: Composites: Part A 67 (2014), pp. 123-130) eine Schwächung von Kohlefasern durch eine Behandlung mit Laserlicht beschrieben.

Die DE102008058882A1 beschreibt eine faserverstärkte Kunststoffstruktur, welche Verstärkungsfasern und eine diese umgebende Matrix aus einem Kunststoff, sowie Sensorfasern, die derart in die Matrix eingebettet sind, umfasst. Hierbei fungieren die Sensorfasern zusammen mit den Verstärkungsfasern als Last tragende Elemente in einem Verbund aus mehreren Schichten, wobei die Sensorfasern eine definierte elektrische Leitfähigkeit aufweisen, die sich bei einer Längenänderung der Sensorfasern ändert.

Die DE102004008432A1 beschreibt einen Dehnungsmessstreifen zur Erfassung von Dehnungen oder Stauchungen an Verformungskörpern.

Die DE102013212036A1 beschreibt einen Strukturabschnitt für ein Fahrzeug, ein Fahrzeug mit einer mechanisch belastbaren Fahrzeugstruktur sowie ein Diagnoseverfahren für die Erkennung einer Beschädigung eines Strukturabschnitts.

Die US2005284232A1 beschreibt ein Messsystem zur Überwachung des strukturellen Zustands von Verbundstoffen. Hierbei wird ein Sensor eingesetzt, der auf einer leitfähigen Tinte mit eingebetteten Karbon-Nanofasern basiert und der in Verbundstoffen eingesetzt werden kann.

Die US8451013B1 beschreibt einen isolierten Fasersensor eingebettet in einer Materialmatrixstruktur und ein entsprechendes Verfahren zur Erfassung der Dehnung als Funktion des gemessenen elektrischen Widerstandes.

Die genannten Druckschriften stellen rein phänomenologisch dar, welche Erscheinungen zu beobachten sind. Eine Lehre zum technischen Handeln wird nicht offenbart.

Es stellt sich somit die Aufgabe, die Ergebnisse der Forschung zu einer technisch umsetzbaren Lösung weiter zu entwickeln und Kohlenstofffasern als in Faserverbundwerkstoffe integrierte Sensoren zu nutzen, wobei die oben genannten Limitierungen überwunden werden sollen. Die Sensoren sollen wiederholbar Dehnungen und Einschläge detektieren und sowohl integral als auch ortsaufgelöst messbar machen können. Darüber hinaus ist ein Verfahren zur Herstellung derartiger Sensoren anzugeben.

Erfindungsgemäß wird die Aufgabe mit Sensoren nach Anspruch 1 gelöst. Vorteilhafte Ausführungsformen sind in den rückbezogenen Unteransprüchen offenbart. Ein Verfahren zur Herstellung der erfindungsgemäßen Sensoren ist in Anspruch 9 offenbart. Vorteilhafte Vorgehensweisen sind in den auf Anspruch 9 rückbezogenen Unteransprüchen offenbart.

Zur Lösung der Aufgabe werden ein oder mehrere Kohlefaserrovings eingesetzt, wobei jeder Kohlefaserroving aus einer Vielzahl einzelner, unidirektional und im Wesentlichen parallel zur Längsachse des Kohlefaserrovings verlaufender Filamente (Einzelfasern) besteht. Besonders bevorzugt besteht der Kohlefaserroving vollständig aus Kohlenstofffaserfilamenten. Weiterhin bevorzugt sind in der Kohlefaserrovings weitere Filamente aus anderen Materialien integriert. Dies sind beispielhaft Metallfaserfilamente, Glasfaserfilamente, Gesteinsfaserfilamente etc. In jedem Fall ist die Kohlefaser jedoch leitfähig für elektrischen Strom.

Die erfindungsgemäße Sensoranordnung weist einen elektrischen Übertragungsweg auf, der mindestens zum Teil, bevorzugt vollständig, aus Kohlefasern besteht. Diese Kohlefasern sind als mindestens ein Kohlefaserroving in ein Matrixmaterial eingebettet. Der erfindungsgemäße Sensor ist geeignet, Zug- oder Druckkräften in Richtung der Längsachse des mindestens einen Kohlefaserrovings zu erfassen. Es können jedoch mehrere Kohlefaserrovings in unterschiedlichen Richtungen im Matrixmaterial verlaufen, so dass derart Zug- oder Druckkräfte in unterschiedlichen Richtungen erfasst werden können.

Erfindungswesentlich ist, dass sich überraschend Kohlefaserrovings als geeignet erwiesen, die vorgeschädigte, und so funktionalisierte Einzelkohlefasern (Sensorfasern) aufweisen. Diese Sensorfasern sind zur integralen Dehnungsmessung mittels Widerstandsmessung sowie zur ortsauflösenden Dehnungsmessung und Schadensdetektion mit dem Verfahren der elektronischen Zeitbereichsreflektometrie (EZBR) geeignet. Überraschend hat sich gezeigt, dass Kohlefaserrovings mit einer geringen Bruchdehnung besonders geeignet sind. Ursächlich dafür ist, dass die genannte Vorschädigung der Kohlefasern erfolgt.

In einer bevorzugten Ausführungsform sind die Kohlefaserrovings in Glasfaserverstärkungsmaterial eingebettet, um den Steifigkeitssprung zwischen Kohlefasern und Matrixmaterial zu mildern.

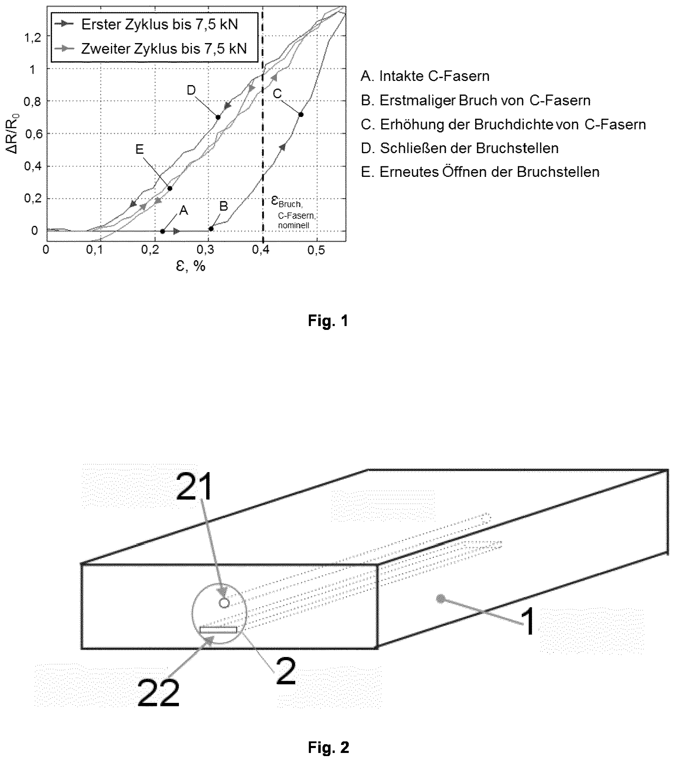

Die Vorschädigung der Kohlefaserrovings erfolgt, indem diese einer Dehnung ausgesetzt werden, die bereits einige der Filamente, aus denen sich die Kohlefaserrovings zusammensetzen, zum Brechen (Überschreiten der Bruchgrenze) bringt (Funktionalisierung). Dies erfolgt bevorzugt, indem die Kohlefaserrovings in einem Matrixmaterial eingeschlossen werden und anschließend, vorzugsweise vor und/oder während der vollständigen Konsolidierung des Matrixmaterials, eine Dehnung des so entstandenen Faserverbundbauteils in axialer Richtung der Fasern erfolgt. Fig. 1 zeigt den Verlauf der Widerstandsmessung in Abhängigkeit von der angelegten mechanischen Spannung. Der "Erste Zyklus" dient der Vorschädigung der Kohlefasern. Mit zunehmender mechanischer Spannung brechen einzelne Kohlefaserfilamente. Diese gebrochenen Kohlefaserfilamente tragen nicht mehr zu einer elektrischen Stromleitung bei, so dass der Widerstand des Kohlefaserroving ansteigt. Mit der Reduktion der mechanischen Spannungen schließen sich die Bruchstellen aufgrund des Zusammenziehens des Matrixmaterials sukzessive wieder und der elektrische Widerstand des Kohlefaserrovings nimmt ab. Nach dem ersten Zyklus besteht bereits eine Vielzahl von Bruchstellen in den Filamenten des Kohlefaserrovings, die sich bei erneut steigender mechanischer Spannung wieder öffnen und bei abnehmender mechanischer Spannung wieder schließen ("Zweiter Zyklus"). Da die Zahl der Bruchstellen der Filamente nicht mehr oder nur noch gering zunimmt, sind die Widerstandsverläufe in Abhängigkeit von der mechanischen Spannung nunmehr festgelegt und reproduzierbar. Eine geringe Hysterese und eine geringe Nichtlinearität der Widerstandsverläufe sind zu beobachten. Wesentlich ist, dass falls die Dehnung bei bereits konsolidiertem Matrixmaterial erfolgt, die Bruchgrenze des Matrixmaterials nicht überschritten wird.

Die reversible Widerstandsänderung beruht somit auf der Entstehung von wiederverschließbaren Brüchen von Filamenten der spröden Kohlefaserrovings. Demnach führt das Öffnen und Schließen der Brüche infolge der anliegenden Belastung über die Änderung des leitendenden Querschnitts des Kohlefaserrovings zur beobachteten Widerstandsänderung. Der aus dem Stand der Technik bekannte piezoresistive Effekt spielt bei dem hier vorgestellten Messprinzip keine oder bestenfalls eine untergeordnete Rolle. Die festgestellte Dehnungssensitivität des neuartigen Sensors erreicht einen Wert von bis zu 8000, wobei der typische k-Faktor piezoresistiver Sensoren typischerweise 1,7 beträgt. Zur Realisierung der Messfunktion müssen die Kohlefaserrovings funktionalisiert werden, d.h. es müssen durch eine für das Matrixmaterial unterkritische Erstbelastung wiederverschließbare Brüche erzeugt werden. Die Überschreitung der Bruchgrenze darf somit nur für den Kohlefaserroving bzw. einige Filamente des Kohlefaserrovings erfolgen. Als Matrixmaterial kommt bevorzugt ein Kunststoff (Thermoplast oder Duroplast), bevorzugt ein bekanntes Harzsystem aus dem Stand der Technik, zum Einsatz. In einer besonders bevorzugten Ausführungsform kann eine Anpassung des Ausdehnungskoeffizienten des Matrixmaterials vorgenommen werden, um den Messbereich des Sensors in dieser Weise zu definieren. Dazu wird dem Matrixmaterial geeigneter Füllstoff, bspw. Glasfaserschnipsel oder ähnliches zugemischt.

Weiterhin erfindungswesentlich ist es, dass die wiederverschließbaren Brüche der Kohlefasern nicht rein stochastisch verteilt sind, sondern gezielt und abgestimmt auf die Messaufgabe eingebracht werden. Dies wird ermöglicht, indem vor der Vorschädigung einiger oder aller Filamente des Kohlefaserrovings Sollbruchstellen in den Filamenten hervorgerufen werden. Diese Sollbruchstellen resultieren aus einer lokalen Schwächung des Kohlefasermaterials der Filamente. Diese Schwächung kann durch mechanische, elektrische, chemische oder physikalische Einwirkung an den Sollbruchstellen hervorgerufen werden. So können die Kohlefaserrovings kurzzeitig der Kerbwirkung einer Klinge oder einer Krümmung ausgesetzt sein. Weiterhin können Chemikalien die Kohlefasern durch Abtragung von Material (Ätzwirkung) oder Strukturschwächung durch Einbau von Fremdatomen in die Bindungsstruktur gezielt und wiederholbar schwächen. Auch die Einwirkung elektrischer Lichtbogen bzw. die Erzeugung von Funkenüberschlägen zwischen einer Elektrode und den Rovings kann diese lokal schwächen.

Besonders bevorzugt ist es jedoch, die Kohlefaserrovings mittels einer Laserbehandlung lokal zu schwächen. Die Laserbehandlung bewirkt insbesondere einen lokalen Materialabtrag (Querschnittsverjüngung), der zu einer geringeren Bruchfestigkeit der Filamente führt und eine Reduzierung der Festigkeit aufgrund der lokalen Temperaturerhöhung. Die Laserbehandlung kann an den Kohlefaserrovings vorzugsweise vor deren Einbringen in das Matrixmaterial erfolgen. Bei einem Matrixmaterial, das für die eingesetzte Laserwellenlänge transparent ist, ist jedoch auch eine Schaffung von Sollbruchstellen bzw. von kompletten Sollbruchstellenverteilungen möglich, wenn die Kohlefaserrovings bereits vom konsolidierten oder unkonsolidierten Matrixmaterial eingeschlossen werden. Zur Laserbehandlung können die Kohlefaserrovings an den gewünschten Stellen einseitig oder beidseitig bestrahlt werden. Es ist auch möglich, bereit mit Sollbruchstellen versehene Filamente nachträglich zu Kohlefaserrovings zu verbinden.

Die Laserbehandlung erfolgt erfindungsgemäß mit Lasern nach dem Stand der Technik. Die Art, Leistung und Bestrahlungsdauer sind abhängig von den Eigenschaften der Kohlefasern und den beabsichtigten Schwächungen. Als besonders geeignet haben sich gepulste Faserlaser mit einer Leistung zwischen 10 - 40 W erwiesen. Die Bestrahlungsdauern lagen dabei bevorzugt zwischen 1 und 5 Sekunden. Besonders bevorzugte Parameter sehen eine Laserleistung von 40 W und 2 Sekunden Bearbeitungszeit je Kohlefaserroving über dessen Breite (ca. 1 mm) vor. Bevorzugt erfolgt eine kontinuierliche Bearbeitung mit konstantem Vorschub der Kohlefaserrovings.

Bei der Herstellung der Sollbruchstellen ist darauf zu achten, dass diese lediglich eine Schwächung, jedoch keine Brüche vor der Vorschädigung der Filamente bewirken.

In einer besonders bevorzugten Ausführungsform werden die Sollbruchstellen in die Rovings so eingebracht, dass die besonders beanspruchten und daher überwachungsbedürftigen Abschnitte mehr Sollbruchstellen und folglich auch mehr wiederverschließbare Brüche aufweisen. Auch die Einbringung von Mustern, bevorzugt Zick-Zack-Formen der Sollbruchstellenverteilung über die Breite der Kohlefaserrovings, hat sich als vorteilhaft erwiesen. Die Sollbruchstellen verschiedener Kohlefaserrovings können an unterschiedlichen Stellen liegen, so dass eine vorteilhafte Kombination zweier oder mehrerer Kohlefaserrovings mit unterschiedlichen Sollbruchstellen eine Anpassung an die Überwachungsaufgabe ermöglicht.

Besonders vorteilhaft ist, dass nunmehr nicht nur besonders spröde Kohlefaserfilamente, die eine geringe Dehnungsbeanspruchung zulassen, genutzt werden können, sondern dass es möglich ist, auch dehnbarere Kohlefaserfilamente einzusetzen, da die Dehnung, bei der die Funktionalisierung erfolgt, hauptsächlich durch den Umfang und die Art der eingebrachten Sollbruchstellen bestimmt werden kann.

Als weiterer zentraler Aspekt für das reversible Schließen der Brüche und somit die Sensorfunktion, werden im Fertigungsprozess induzierte Eigenspannung der Kohlefasern angesehen. Diese entstehen durch Schwindung des Matrixmaterials, bspw. bei einem Harzsystem als Matrixmaterial, beim Abkühlen infolge von Umbauprozessen in der Molekülstruktur des Harzes und zum anderen infolge der unterschiedlichen Ausdehnungskoeffizienten des Matrixmaterials und der Kohlefasern des Kohlefaserrovings. Beim Abkühlen und zeitgleichen Erstarren des Matrixmaterials zum Ende von FKV-Fertigungsprozessen schwindet die Matrix chemisch und thermisch bedingt, wohingegen die Kohlefasern ihre Länge nahezu nicht verändern. Infolge der unterschiedlichen Ausdehnungen liegt nach der Konsolidierung eine lokale Druckeigenspannung in den Kohlefasern und der Grenzschicht zum Matrixmaterial vor. Da die resultierende Kraftkomponente der Druckeigenspannung derart orientiert ist, dass die Bruchfragmente aufeinander zu gedrückt werden, wird das reversible Schließen der Brüche unterstützt. Insbesondere der Aspekt der chemischen Schwindung gewährleistet, dass das Messprinzip sowohl für CFK-Verbunde, bei denen die thermische Schwindung geringer ausgeprägt ist, als auch bei GFK-Verbunde, anwendbar ist. Der Effekt des Aufeinanderpressens der Bruchfragmente ist somit eine Eigenschaft des Matrixmaterials.

In einer ganz besonders bevorzugten Ausführungsform für Bauteile aus Faserverbundwerkstoffen, sind die Kohlefaserrovings des Sensors in die Faserverstärkung integriert oder Teil der Faserverstärkung und das Matrixmaterial ist mit dem des Faserverbundbauteils identisch. Wenn die Kohlefaserrovings des Sensors bzw. der Sensoren in die Faserverstärkung integriert oder Teil der Faserverstärkung sind, sind diese bevorzugt so im Faserverbundwerkstoff ausgerichtet, dass die Kohlefaserrovings in Richtung der zu erwartenden Beanspruchungen verlaufen. Die Sensoren können auch in vorgegebenen Mustern flächig oder räumlich im Faserverbundwerkstoff verteilt sein. Hier sind parallele Verläufe von Sensoren in einer oder mehreren Ebenen bevorzugt. Ebenfalls möglich ist die Anordnung der Sensoren in gekrümmten Flächen. Auch können die Sensoren in wenig beanspruchten Abschnitten von Bauteilen aus Faserverbundwerkstoff mit geringer Dichte und in stark beanspruchten Teilen mit höherer Sensordichte vorliegen. Parallel verlaufende Sensoren können auch aus unterschiedlichen Kohlefasern bzw. Kohlefaserrovings bestehen und so unterschiedliche Messprofile ermöglichen. Weiterhin bevorzugt wird die lokale Sensorempfindlichkeit angepasst, indem die Kohlefaserrovings der Sensoren in den Bereichen mit großem Überwachungsbedarf mehr Sollbruchstellen aufweisen, als in den anderen Bereichen. Weiterhin lässt sich über das Ausmaß der Schwächung der Kohlefaserfilamente bestimmen, bei welcher Dehnung diese brechen. Dies erlaubt es, die Sensorempfindlichkeit einmalig einzustellen.

In einer bevorzugten Ausführungsform sind die erfindungsgemäßen Sensoren in der Oberfläche des zu vermessenden Bauteils oder direkt auf dieser angeordnet. Sie können dazu bspw. mit Matrixmaterial oder einem anderen geeigneten Klebstoff auf der Oberfläche verklebt sein.

In einer ganz besonders bevorzugten Ausführungsform ist der erfindungsgemäße Sensor als Einwegsensor ausgeführt. Hierbei wird ein (oder mehrere) nicht vorgeschädigter jedoch mit Sollbruchstellen versehener Kohlefaserroving in Matrixmaterial eingebracht und nicht funktionalisiert. Dieser Einwegsensor wird dann auf oder an einem Bauteil angeordnet. Nach dem Beanspruchungsereignis kann anhand der nun vorliegenden Funktionalisierung auf die Beanspruchung geschlossen werden, der das Bauteil ausgesetzt war. Hierzu wir der Einwegsensor einer Zugbeanspruchung ausgesetzt und der Widerstandsverlauf gemessen bzw. eine EZBR-Messung vorgenommen.

Besonders geeignet sind für den Aufbau der erfindungsgemäßen Sensoren die folgenden Kohlenstoffasern: (Ultra-)hochmodulige (U-HM) Fasern mit geringer Bruchdehnung bspw.: Dialead K13C2U 1K (0,4% Bruchdehnung), TohoTenax UMS55 (0,7% Bruchdehnung), TohoTenax HMA3 (0.9% Bruchdehnung). Durch die nominelle Bruchdehnung der Fasern wird das für die Funktionalisierung erforderliche Dehnungsniveau bestimmt. Die Bruchdehnung der Fasern muss deutlich unterhalb der des Grundwerkstoffs (Matrixmaterials) liegen, um die Funktionalisierung bei werkstoffimmanenten Sensoren zu ermöglichen. Aufgrund des Einbringens der lokalen gezielten Schwächungen (Sollbruchstellen) sind jedoch auch Fasern mi höherer Bruchdehnung einsetzbar.

Der Kohlefaserroving besteht in einer bevorzugten Ausführungsform aus unterschiedlichen Kohlefasertypen. So kann die Messfunktion vorteilhaft auf einen größeren Dehnungsbereich ausgeweitet werden, da die Bruchdehnung und Steifigkeit der verschiedenen Kohlefasertypen unterschiedlich ist und sich so die Bruchstellen bei unterschiedlichen Dehnungsbeanspruchungen öffnen.

In einer bevorzugten Ausführungsform wird, basierend auf dem angewandten Messprinzip, der Fasersensor als integral messender Dehnmessstreifen bzw. als ortsauflösender EZBR-Sensor eingesetzt. Bei der Anwendung als Dehnmessstreifen setzt sich der Fasersensor lediglich aus einem Kohlefaserroving zusammen, an dem eine Widerstandsmessung durchgeführt wird. Bei den EZBR-basierten Anwendungen ist der Fasersensor ein Mehrkomponenten-System, bestehend aus mindestens einem Kohlefaserroving, einem zweiten Leiter (Metall oder Kohlefasern, draht- oder streifenförmig) sowie einem isolierenden Matrix- bzw. Haftmaterial. Bevorzugt werden die erfindungsgemäßen Sensoren in das Faserverstärkungsmaterial des Faserverbundbauteils vor der Konsolidierung des Matrixmaterials eingelegt (siehe Fig. 2). Je nach vorgesehener Sensorfunktion sind einzig der Kohlefaserroving (integraler Dehnmessstreifen) oder der Kohlefaserroving und der zweite elektrische Leiter (ortsaufgelöster EZBR-Sensor) elektrisch leitfähig kontaktiert.

Der erfindungsgemäße Sensor wird vorteilhaft vor der Nutzung kalibriert, indem eine Widerstandsmessung in Abhängigkeit von der Dehnung des Matrixmaterials aufgezeichnet wird. Dabei darf die Dehnung nicht zum Bruch der Faserverstärkung oder des Matrixmaterials führen.

Der erfindungsgemäße Sensor kann als Kohlefaserroving vollständig in den Faserverbundwerkstoff integriert sein. Er wirkt vorteilhaft nicht als Fremdkörper im Werkstoffverbund.

In einer besonders bevorzugten Ausführungsform wird der erfindungsgemäße Sensor als Überlast-Dehnungssensor ausgeführt. Dazu wird ein Sensor, der geschwächte Kohlenstofffasern aufweist, jedoch nicht vorgeschädigt wurde, auf einem zu untersuchenden Bauteil befestigt oder darin integriert. Bei der Dehnungsbeanspruchung des Bauteils entstehen Brüche an den Sollbruchstellen der Kohlefaserfilamente.

Dadurch wird die Empfindlichkeit des Sensors nachhaltig verändert und über deren Bestimmung kann auf die maximale Belastung während der Einsatzdauer geschlossen werden. Ein entscheidender Vorteil gegenüber dem Stand der Technik ist, dass der Sensor während der Überlastüberwachung weder Energieversorgung noch Auswerteelektronik erfordert.

### Verfahren zur Herstellung der erfindungsgemäßen Sensoren mit explizit hergestellter Matrix für die externe Applikation

Für die externe Applikation (Applikation auf dem zu überwachenden Bauteil) der verschiedenen Sensorausführungen muss der Kohlefaserroving in eine Kunststoffmatrix, welche Druckeigenspannungen zur Funktionserfüllung aufweist, eingebettet werden. Ein bevorzugtes Verfahren geht wie folgt vor: In einem ersten Schritt der Herstellung wird ein trockener Kohlefaserroving in einem vorgegebenen Muster einer Bestrahlung mit Laserstrahlung unterzogen. Dies führt zur definierten Schwächung der Kohlefaserfilamente an vorgegebenen Sollbruchstellen. Anschließend wird der Kohlefaserroving mit dem Matrixmaterial konsolidiert. Für eine ortsaufgelöste Messung (mit EZBR) wird dabei ein weiterer elektrischer Leiter beabstandet und vorzugsweise im Wesentlichen parallel zum Kohlefaserroving und von diesem elektrisch isoliert im Matrixmaterial platziert und das Matrixmaterial anschließend konsolidiert. Dies erfolgt bevorzugt in einem kontinuierlichen Verfahren, vorzugsweise einem Rolle-zu-Rolle-Verfahren. Über geeignete Heizeinrichtungen und Düsen können die Konsolidierung sowie der Querschnitt des Sensors gesteuert werden. Die Funktionalisierung erfolgt indem gezielt Faserbrüche erzeugt werden, bevorzugt in einer dem Rolle-zu-Rolle-Verfahren nachgeschalteten Umlenkeinrichtung. Dabei werden die konsolidierten Faserrovings vorzugsweise über Spulen mit einem Radius kleiner als dem Biegeradius der Kohlefasern geführt. Dies stellt die Erzeugung einer Vielzahl von Faserbrüchen sicher, die in der ganz überwiegenden Anzahl in den Bereichen der vorher eingebrachten Sollbruchstellen liegen. Möglich ist außerdem die Funktionalisierung in einer Zugeinrichtung.

Nach der Funktionalisierung wird in einer Schneideinheit der im kontinuierlichen Verfahren (Rolle-zu-.Rolle-Verfahren) hergestellte Endlos-Sensor auf die je nach Sensortyp (Fasersensor, DMS-ähnlich) erforderliche Länge zugeschnitten. Abschließend erfolgt das Freilegen der Kohlefaserenden und die Kontaktierung durch Verlöten, Kleben oder Stecken. Vorteilhaft erfolgt die gesamte Sensorherstellung in einem aus Einzelprozessen zusammengesetzten Rolle-zu-Rolle-Verfahren.

In beiden Fällen (mit oder ohne elektrischen Leiter) muss auf die korrekte Einstellung des Eigenspannungszustands der Kohlefasern infolge der Matrixschwindung durch geeignete Auswahl des Matrixmaterials und Prozessparameter geachtet werden, bspw. können zusätzliche Glasfasern oder andere Füllstoffe dazu dienen die thermische Schwindung und damit die Höhe der Vorspannung anzupassen.

In einer weiteren bevorzugten Ausführungsform werden die Sensorfasern vorgespannt (Vorspannmechanismus), während das Matrixmaterial konsolidiert wird. Fasern mit unterschiedlichen Vorspannungen können dann für Messungen in unterschiedlichen Belastungsbereichen, insbesondere zur Detektion von Druckbelastungen auf das Matrixmaterial (bspw. bei Biegungen) genutzt werden, wobei die Druckbelastungen im Wesentlichen parallel zum Faserverlauf erfolgen müssen (bzw. es wird die Komponente der Druckkraft in Richtung des Faserverlaufs ermittelt).

### Verfahren zur Herstellung der erfindungsgemäßen Sensoren als werkstoffimmanentes Element

Bei der werkstoffimmanenten Variante der erfindungsgemäßen Sensoren übernimmt die Matrix des CFK- oder GFK-Grundwerkstoffs die Realisierung einer Druckeigenspannung, d.h. die explizite Herstellung einer Kunststoffmatrix, ausschließlich für den Sensor, ist nicht erforderlich. Aufgrund der unterschiedlichen Dimensionen der Sensorausführungen werden die Sensoren in zwei unterschiedlichen Schritten der FKV-Herstellung integriert.

Eine Sensorintegration während des Textilbildungsprozesses (Verstärkungsfasergebilde) ist bevorzugt für den langgestreckten Fasersensor anzuwenden. Ein solches Vorgehen ist insbesondere aufgrund des erheblichen Kosteneinsparungspotenzials sowie der bindungstechnisch bedingten hervorragenden Lastübertragung zwischen textilem Verstärkungshalbzeug und Fasersensor vorteilhaft. In einem ersten Schritt der Herstellung werden in einem Kohlefaserroving Sollbruchstellen mittels einer Laserbehandlung der Filamente eingebracht. Anschließend wirdder trockene Kohlefaserroving direkt im Textilbildungsprozess des Grundwerkstoffs verarbeitet. Für eine ortsaufgelöste Messung (mit EZBR) wird zusätzlich ein elektrischer Leiter gemeinsam mit dem Kohlefaserroving, jedoch von diesem beabstandet und elektrisch isoliert, platziert. Beim Stapeln der zugeschnitten Textilien ist darauf zu achten, dass die Kohlefasern nach der Konsolidierung kontaktiert werden können, bspw. durch die Realisierung von Kontakten an der Bauteiloberfläche.

### Verfahren zur Herstellung der erfindungsgemäßen Sensoren zur integralen Dehnungsmessung

Zur Realisierung der integralen Dehnungsmessung ist die Herstellung von Dehnmessstreifen (DMS) mit dem gleichen Aufbauprinzip wie bei Halbleiter-DMS bevorzugt. Aufgrund ihrer deutlich kürzeren Bauform können die DMS-ähnlichen Sensoren nicht textiltechnisch verarbeitet werden. Es wird (bevorzugt automatisiert) ein Kohlefaserroving in den Schichtaufbau einer dünnwandigen Faserverbund-Trägerstruktur, bspw. ein GFK-Verbund, abgelegt und anschließend konsolidiert (siehe Fig. 3). Das Kohlefaserroving weist dabei bereits die Sollbruchstellen auf, die durch Laserbehandlung eingebracht wurden. Die Anschlüsse für die Kontaktierung müssen hier bereits bis zum Bauteilrand mitgeführt werden. Darüber hinaus muss auf die korrekte Einstellung des Eigenspannungszustands der Kohlefasern infolge der Matrixschwindung durch geeignete Auswahl der Trägerstrukturmaterialien und Prozessparameter geachtet werden. Anschließend erfolgt die Funktionalisierung (Vorschädigung) der Kohlefasern durch das Aufbringen einer definierten, für den Grundwerkstoff unterkritischen Belastung, bspw. einer Zugbelastung, am GFK-Verbund. Nach der Kontaktierung der Enden des Kohlefaserrovings an ein Messsystem kann die Widerstandsänderung erfasst und mittels des bekannten k-Faktors die Dehnung an der Messstelle berechnet werden.

### Figuren

**Fig. 1** zeigt die Messergebnisse einer Widerstandsänderung des Kohlefaserrovings (des Sensors) bei zweimaliger Belastung bis 7,5 kN, die eine 0,5 %ige Dehnung des Kohlefaserrovings bewirkt.
**Fig. 2** zeigt den schematischen Aufbau des werkstoffimmanenten Sensors 2 in einem glasfaserverstärkten Kunststoffverbund 1. Der Sensor 2 ist hier als EZBR-Sensor ausgeführt und weist einen metallischen Leiter 22 auf, der parallel zur Kohlefaser 21 verläuft.
**Fig. 3** zeigt schematisch den Aufbau eines Dehnmessstreifens mit einem Kohlefaserroving 21 in Seitenansicht a) und Draufsicht b). Der Kohlefaserroving 21 ist an den beiden Enden kontaktiert. Es bestehen elektrisch leitfähige Verbindungen zu den beiden Kontakten 23. Der Sensor 2 ist in Matrixmaterial 1 eingeschlossen.
**Fig. 4** zeigt aufgezeichnete Maschinendaten aus einem Belastungsversuch bis zum Bruch des GFK-Verbunds (a) und ein kontinuierlich gemessenes EZBR-Signal über der Prüfkörperlänge (b).
**Fig. 5** zeigt Aufnahmen der gezielten Erzeugung von Brüchen im eingebetteten Kohlefaserroving durch eine angepasste Laserbehandlung am trockenen Roving.

### Ausführungsbeispiele

Als leitende Sensorkomponenten wurden bei Prüfkörpern ein 1K-Roving (bestehend aus 1000 Einzelfasern) aus Kohlefasern mit einer sehr geringen Bruchdehnung (nominell 0,4 % Dehngrenze) sowie ein Kupferstreifen verwendet, wobei beide Komponenten durch eine UD-Einzelschicht des GFK-Verbundes voneinander isoliert wurden. Je nach fokussierter Sensorfunktion wurden im Folgenden einzig der Kohlefaserroving (integraler Dehnmessstreifen) oder beide elektrischen Leiter (ortsaufgelöster EZBR-Sensor) kontaktiert. Die Rovings wurden bei diesen Sensorkomponenten nicht laserbehandelt, sodass die Stellen der Faserbrüche und deren Dichte sich aus der Kombination aus Grundwerkstoff und sensorischen Kohlefasern ergeben.

Außerdem wurden Probekörper zur Untersuchung der gezielten Einstellung von Bruchstellen gefertigt. Dafür wurden die Kohlefaserfilamente zur Erzeugung von Sollbruchstellen laserbehandelt. Es wurde eine Laserleistung von 40 W und 2 Sekunden Bearbeitungszeit je Kohlefaserroving über dessen Breite (1 mm) verwendet. Es wurde mittels Laser eine Schwächungslinie über die Breite der Kohlefaserrovings gezogen.

### Durchgeführte Versuche:

An den Prüfkörpern (250 mm x 25 mm x 1,5 mm) wurden Zugversuche durchgeführt, wobei bei einem Prüfkörper eine Widerstandsmessung am Kohlefaserroving durchgeführt wurde und an einem zweiten Prüfkörper das Verfahren der EZBR angewendet wurde. Eine Übersicht der durchgeführten Versuche enthält die Tabelle 1.

Neben den Messungen am Fasersensor bzw. dem Kohlefaserroving wurden die eingeleitete Zugkraft sowie die Dehnung des Probekörpers mittels Extensometer erfasst.

**Tabelle 1: Übersicht der durchgeführten Versuche zur Untersuchung des Verhaltens des Fasersensors**

| ID | Prüfkörperkennung | Prüfprozedur | Prüfkörperbelastung | Messverfahren |
|---|---|---|---|---|
| 1 | PK-1 | zyklische Zugversuche, Dreieckslastverlauf | Anfahren mehrerer Lastamplituden (1kN / 4kN/ 7,5kN /10 kN/ 15 kN/ bis Bruch) | Widerstandsmessung am Kohlefaserroving |
| 2 | PK-2 | zyklische Zugversuche, Dreieckslastverlauf | Anfahren mehrerer Lastamplituden (1kN/ 4 kN/ 7,5kN/ 10 kN/ 15 kN/ 20 kN/ bis Bruch) | EZBR am Fasersensor |

### Fasersensor als integraler Dehnmessstreifen

In Fig. 1 ist die Widerstandsänderung des eingebetteten Kohlefaserrovings bei zyklischer Zugbelastung bis 7,5 kN dargestellt. Dieses Kraftniveau entspricht einer Prüfkörperdehnung von etwa 0,55% und wurde wiederholt angefahren. Aus Fig. 1 ist zu erkennen, dass beim erstmaligen Anfahren, d.h. die Probe wurde zuvor nicht bis zu dieser Lastamplitude belastet, keine messbare Dehnungssensitivität (bei 0,1 Ohm Messauflösung, Multimeter VC840, Voltcraft) bis 0,3% Dehnung vorliegt. Danach erfolgt eine signifikante Widerstandsänderung um 120 % bei progressivem Kurvenverlauf. Beim Entlasten unterliegt die Widerstandsänderung einer Hysterese, wobei sich letztlich der Ausgangswiderstand einstellt. Beim erneuten Belasten weist die Widerstandsänderung des Kohlefaserrovings ein deutlich anderes Verhalten auf. Bereits bei 0,09 % tritt eine signifikante Widerstandsänderung auf, welche beim Lastmaximum erneut den vorherigen Wert von 120 % erreicht. Bei Dehnmesstreifen wird zur Beurteilung der Dehnungssensitivität der k-Faktor verwendet. Dieser gibt die Proportionalität der Widerstandsänderung zur Dehnung an. Im Bereich von 0,3 % bis 0,4 % Dehnung weist der Fasersensor einen k-Faktor von etwa 470 auf. Dieser Wert liegt deutlich über dem k-Faktor herkömmlicher metallischer Dehnmessstreifen (k-2,1) und der für geringe Dehnungen verwendeten Halbleiter-Dehnmessstreifen (k-150).

Die beim erfindungsgemäßen Verfahren beobachtete signifikante Widerstandsänderung überschreitet die aus der Literatur bekannten und mit dem hauptsächlich untersuchten piezoelektrischen Effekt der Kohlefaser, erklärten Werte.

### Fasersensor als ortsaufgelöster EZBR-Sensor

Die hohe, reversible Widerstandsänderung der funktionalisierten Kohlefasern führt dazu, dass deutliche Änderungen der Leitungsimpedanzverteilung einer zweiadrigen elektrischen Leitung, deren Bestandteil die Kohlefasern sind, eine ortsaufgelöste Messung ermöglichen. In weiterführenden Untersuchungen wurde das Potenzial des Fasersensors für die ortsaufgelöste Dehnungsmessung und Schadensdetektion mittels des Verfahrens der elektrischen Zeitbereichsreflektometrie (EZBR) untersucht. Dazu wurden die Leiterkomponenten des Fasersensors (Kohlefaserroving und Kupferstreifen) an ein Koaxialkabel angeschlossen. Mit einem für die EZBR geeigneten Messgerät (*TDR-3000, Sympuls GmbH*) kann die Leitungsimpedanz der zweiadrigen elektrischen Leitung ortsaufgelöst erfasst werden. Da zur Beschreibung des Sensorverhaltens maßgeblich die Leitungsimpedanz herangezogen wird, soll diese im Folgenden als Sensorimpedanz bezeichnet werden.

Es wurde das Verhalten des Fasersensors bei Belastung bis zum Bruch des GFK-Verbunds untersucht (siehe Fig. 4). Aus der mittels EZBR-Verfahren gemessenen Sensorimpedanz lässt sich deren stetige Zunahme infolge der Dehnungszunahme erkennen. Beim Eintreten des Bruchs zeigt die Sensorimpedanz eine sprunghafte Erhöhung auf. Diese korreliert zeitlich mit der sprunghaften Abnahme der aufgenommenen Dehnungs- und Kraftwerte. Ein geringer zeitlicher Versatz ist auf den manuell ausgeführten Start der Messaufzeichnung von Dehnungs- und Kraftmessung sowie EZBR-Messung zurückzuführen, wodurch eine unzureichende Synchronisation vorliegt. Aus dem EZBR-Signal ist zudem der Ort der sprunghaften Impedanzänderung ablesbar. Hier zeigt sich eine klare Übereinstimmung mit der im GFK-Verbund auftretenden Bruchstelle. Die Untersuchungen weisen die Einsetzbarkeit des Fasersensors für die unter- und überkritische Strukturüberwachung nach.

Es wurde gezeigt, dass mit einem Sensor sowohl eine ortsaufgelöste Dehnungsmessung als auch eine Schadensdetektion und darüber hinaus eine präzise Schadenslokalisation möglich ist.

### Untersuchung der gezielten Einstellung von Bruchstellen

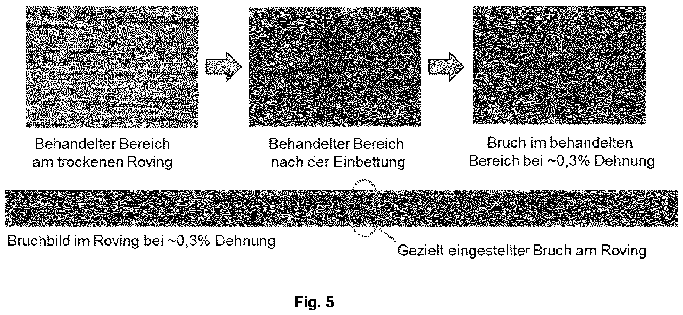

In den Vorarbeiten konnten die Machbarkeit der gezielten Einflussnahme auf die Ausbildung des Bruchmusters nachgewiesen werden, siehe Fig. 5. Dies erlaubt die kontrollierte Einstellung der sensorischen Eigenschaften des Messelements im Herstellungsprozess und stellt ein Alleinstellungsmerkmal der vorliegenden Erfindung dar.

### Fasersensor für externe Applikation:

Für die externe Applikation wird ein dünner GFK-Verbund als Trägermaterial hergestellt, in den der Sensor integriert wird. Der so hergestellte Sensorpatch kann auf das zu vermessende Bauteil aufgeklebt werden.

Für die integrale Dehnungsmessung wird der Verbund aus 2 UD-Glasfaser-Prepreglagen (Dicke ∼ 0,1 mm), die zu einem [0/ 0] Schichtaufbau gestapelt werden, aufgebaut. Ein 1K-Roving (bestehend aus 1000 Einzelfasern) aus Kohlefasern (Dialead K13C2U) mit einer sehr geringen Bruchdehnung (nominell 0,4 % Dehngrenze) wird zwischen die beiden Einzelschichten des GFK-Verbundes vor der Konsolidierung eingelegt. Für eine ortaufgelöste Dehnungsmessung wird der Verbund aus 3 UD-Glasfaser-Prepreglagen (Dicke ∼ 0,1 mm), die zu einem [0/ 90/ 0] Schichtaufbau gestapelt werden, aufgebaut. Neben dem Kohlefaserroving wird zusätzlich ein handelsüblicher Kupferstreifen (6 mm x 0,05 mm) verwendet, wobei beide Komponenten durch die 90°-Einzelschicht des GFK-Verbundes voneinander isoliert werden. Als Matrixmaterial des Verbundes wird das Epoxidharz L von R&G Composites GmbH mit den zugehörigen Härter L verwendet. Die Sensorlänge kann je nach Messaufgabe zwischen wenigen Millimetern, für die integrale Dehnungsmessung und mehreren Metern bei der ortsaufgelösten Messung betragen.

### Ausführungsbeispiel für integrierten Sensor in FKV-Verbund:

Für die integrale Dehnungsmessung kann ein 1K-Roving (bestehend aus 1000 Einzelfasern) aus Kohlefasern (Dialead K13C2U) mit einer sehr geringen Bruchdehnung (nominell 0,4 % Dehngrenze) zwischen die Einzellagen des FKV-Bauteils vor der Konsolidierung eingelegt werden. Für eine ortaufgelöste Dehnungsmessung wird zusätzlich ein handelsüblicher Kupferstreifen (6 mm x 0,05 mm) verwendet, wobei beide Komponenten durch eine UD-Einzelschicht (∼ Schichtdicke etwa 0,1 mm) des GFK-Verbundes voneinander isoliert werden. Die Länge der Sensorkomponenten kann je nach Messaufgabe zwischen wenigen Millimetern, für die integrale Dehnungsmessung und mehreren Metern bei der ortsaufgelösten Messung betragen. Als Matrixmaterial des FKV-Bauteils wird das Epoxidharz L von R&G Composites GmbH mit den zugehörigen Härter L verwendet.

Zu beachten ist, dass bei der Integration in CFK, die Sensorkomponenten durch eine geeignete Beschichtung zuvor elektrisch isoliert werden müssen, da diese durch den Grundwerkstoff nicht gegeben ist.

### zitierte Nichtpatentliteratur

Mir Mohammed Badrul Hasan, Olaf Diestel, Chokri Cherif: Electro-mechanical properties of friction spun conductive hybrid yarns made of carbon filaments for composites. Textile Research Journal 2011 81: 1603, June 2011
Alexander Horoschenkoff; Christian Christner: Carbon fibre sensor: Theory and application. InTech 2012, DOI: 10.5772/50504
H. Schmutzler, J. Popp, E. Büchter, H. Wittich, K. Schulte, B. Fiedler: Improvement of bonding strengt hof scarf-bonded carbon fibre/epoxy laminates by Nd:YAG laser surface activation: Composites: Part A 67 (2014), pp. 123-130
J.C. Abry, S. Bochard, A. Chateauminois, M. Salvia, G. Giraud: In situ detection of damage in CFRP laminates by electricalresistance measurements., Composites Science and Technology 59 (1999) 925±935
J .C. Abry, Y.K. Choi, A. Chateauminois, B. Dalloz, G. Giraud, M. Salvia: In-situ monitoring of damage in CFRP laminates by means of AC, Composites Science and Technology 61 (2001) 855-864

## Patentansprüche

1. Sensor aus mindestens einem Kohlefaserroving eingebettet in einem Matrixmaterial zur Messung von Dehnungen in Richtung der Längsachse des Kohlefaserrovings, wobei der Kohlefaserroving eine Vielzahl von Kohlefaserfilamenten aufweist **dadurch gekennzeichnet, dass**
- wenigstens einzelne Kohlefaserfilamente an definierten Sollbruchstellen ihrer Längserstreckung in ihrer Bruchfestigkeit durch mechanische, elektrische, chemische oder physikalische Einwirkung reduziert sind, und
- wenigstens einzelne Filamente in Richtung der Längsachse des Kohlefaserrovings materialspannungsabhängig wiederverschließbare Bruchstellen aufweisen, wobei der Sensor mindestens eine Kontaktfläche zur elektrischen Kontaktierung des Kohlefaserrovings von außerhalb des Matrixmaterials aufweist.

2. Sensor nach Anspruch 1, **dadurch gekennzeichnet, dass** ein Gerät zur elektrischen Widerstandsmessung den Sensor an beiden Enden kontaktiert.

3. Sensor nach Anspruch 1, **dadurch gekennzeichnet, dass** parallel zu mindestens einem Kohlefaserroving des Sensors und von diesem elektrisch isoliert ein elektrischer Leiter verläuft, der an mindestens einer Stelle von außerhalb des Faserverbundwerkstoffes elektrisch kontaktierbar ist.

4. Sensor nach Anspruch 3, **dadurch gekennzeichnet, dass** ein Gerät zur elektrischen Zeitbereichsreflektometrie an ein Ende des Sensors und das diesem nächstliegenden Ende des elektrischen Leiters angeschlossen ist.

5. Sensor nach einem der vorhergehenden Ansprüche **dadurch gekennzeichnet, dass**
a. mindestens ein Kohlefaserroving im ausgehärteten Matrixmaterial unter Zugspannung oder Druckspannung steht, oder
b. verschiedene Kohlefaserrovings unter unterschiedlichen Druckspannungen oder unterschiedlichen Zugspannungen stehen.

6. Sensor nach Anspruch 5, **dadurch gekennzeichnet, dass**
a. Kohlefaserfilamente eines Kohlefaserrovings Sollbruchstellen an unterschiedlichen Stellen aufweisen, oder
b. Kohlefaserfilamente unterschiedlicher Kohlefaserrovings Sollbruchstellen an unterschiedlichen Stellen aufweisen.

7. Sensor nach einem der Ansprüche 1 bis 6, **dadurch gekennzeichnet, dass** der Sensor in den Faserverbundwerkstoff eines Faserverbundwerkstoffbauteils integriert ist.

8. Sensor nach einem der vorhergehenden Ansprüche, **dadurch gekennzeichnet, dass** der Sensor auf der Oberfläche eines Bauteils so angeordnet ist, dass Zugbeanspruchungen des Bauteils auf den Sensor übertragen werden.

9. Verfahren zur Herstellung eines Sensors aus mindestens einem Kohlefaserroving, der eine Vielzahl von Kohlefaserfilamenten aufweist, eingebettet in einem Matrixmaterial, **dadurch gekennzeichnet, dass** der Kohlefaserroving so behandelt wird, dass einzelne Kohlefaserfilamente an definierten Sollbruchstellen ihrer Längserstreckung in ihrer Bruchfestigkeit reduziert werden und so Sollbruchstellen ausbilden und dass die Bruchgrenzen wenigstens einzelner Filamente durch Dehnung des Kohlefaserrovings an den definierten Sollbruchstellen überschritten werden und sich die so entstandenen Bruchstellen nach der Dehnung wieder schließen und nach dem Aushärten des Matrixmaterials mindestens eine Kontaktfläche zur elektrischen Kontaktierung des mindestens einen Kohlefaserrovings so freigelegt wird oder während der Konsolidierung frei gehalten wurde, dass die Kontaktfläche von außerhalb des Matrixmaterials elektrisch kontaktierbar ist.

10. Verfahren zur Herstellung eines Sensors nach Anspruch 9, **dadurch gekennzeichnet, dass**
a. entweder nach dem Einbringen in das Matrixmaterial und vor dessen vollständiger Konsolidierung mindestens einmal über die Bruchgrenze der definierten Sollbruchstellen der einzelnen Filamente des Kohlefaserrovings gedehnt wird,
b. oder nach dem Einbringen in das Matrixmaterial und nach dessen Konsolidierung mindestens einmal über die Bruchgrenzen der definierten Sollbruchstellen der einzelnen Filamente des Kohlefaserrovings jedoch nicht bis zur Überschreitung der Bruchgrenze des ausgehärteten Matrixmaterials gedehnt wird.

11. Verfahren zur Herstellung eines Sensors nach Anspruch 9 oder 10, **dadurch gekennzeichnet, dass** die Reduzierung der Bruchfestigkeit wenigstens einzelner Kohlefaserfilamente an definierten Sollbruchstellen ihrer Längserstreckung erfolgt, indem die Kohlefaserfilamente durch mechanische, elektrische, chemische oder physikalische Einwirkung an den vorgesehenen Sollbruchstellen geschwächt werden.

12. Verfahren zur Herstellung eines Sensors nach Anspruch 11, **dadurch gekennzeichnet, dass** die Reduzierung der Bruchfestigkeit wenigstens einzelner Kohlefaserfilamente an definierten Sollbruchstellen ihrer Längserstreckung mittels eines Lasers erfolgt.

13. Verfahren zur Herstellung eines Sensors nach einem der Ansprüche 9 bis 12, **dadurch gekennzeichnet, dass** die Sollbruchstellen in vorgegebenen Mustern auf die Kohlefaserrovings aufgebracht werden.

14. Verfahren zur Herstellung eines Sensors nach einem der Ansprüche 9 bis 13, **dadurch gekennzeichnet, dass** ein elektrischer Leiter vor dem Aushärten des Matrixmaterials in den Sensor eingebracht wird, beabstandet und der parallel zu mindestens einem Kohlefaserroving des Sensors verläuft, jedoch von diesem elektrisch isoliert ist.

15. Verfahren nach einem der Ansprüche 8 bis 14, **dadurch gekennzeichnet, dass** mindestens ein Kohlefaserroving des Sensors während des Aushärtens des Matrixmaterials unter mechanischer Spannung gehalten wird oder dass mehrere Kohlefaserrovings in das Matrixmaterial eingebracht werden, die während des Aushärtens des Matrixmaterials unter unterschiedlichen mechanischen Spannungen gehalten werden.

16. Verfahren nach einem der Ansprüche 9 bis 15, **dadurch gekennzeichnet, dass** nach dem Aushärten des Matrixmaterials ein Kalibriervorgang durchgeführt wird, indem der elektrische Widerstand des Sensors in Abhängigkeit von der Dehnung des Matrixmaterials erfasst wird, wobei die Dehnung die Bruchgrenze von Matrixmaterial und Kohlefaserroving nicht überschreitet.

17. Verfahren nach einem der Ansprüche 9 bis 16, **dadurch gekennzeichnet, dass** die Dehnungsbeanspruchung über die Bruchgrenzen wenigstens der definierten Sollbruchstellen der einzelnen Filamente des Kohlefaserrovings durch die Belastung des Bauteils erfolgt, auf dem bzw. in dem der Sensor angeordnet ist.

18. Verwendung eines nach dem Verfahren nach Anspruch 17 hergestellten Sensors, **dadurch gekennzeichnet, dass** die Dehnungsbeanspruchung, der der Sensor ausgesetzt war, durch Widerstandsmessung oder EZBR ermittelt wird, indem der Sensor einer steigenden Dehnungsbeanspruchung unterworfen und festgestellt wird, wie hoch die Dehnungsempfindlichkeit des Sensors ist.

## Claims

1. Sensor consisting of at least one carbon-fibre roving embedded in a matrix material for measuring strain in the direction of the longitudinal axis of the carbon-fibre roving, the carbon-fibre roving comprising a plurality of carbon-fibre filaments, **characterised in that**
- at least individual carbon-fibre filaments are reduced in their breaking strength at defined intended breaking points of their longitudinal extension by means of mechanical, electrical, chemical or physical actions, and
- at least individual filaments comprise, in the direction of the longitudinal axis of the carbon-fibre roving, breaking points that are recloseable depending on material stress, the sensor comprising at least one contact surface for electrically contacting the carbon-fibre roving from outside the matrix material.

2. Sensor according to claim 1, **characterised in that** a device for measuring electrical resistance makes contact with the sensor at both ends.

3. Sensor according to claim 1, **characterised in that** an electrical wire extends in parallel with at least one carbon-fibre roving of the sensor and is electrically insulated therefrom, and is electrically contactable at least one point from outside the fibre composite material.

4. Sensor according to claim 3, **characterised in that** a device for electrical time domain reflectometry is attached to an end of the sensor and the end of the electrical wire nearest thereto.

5. Sensor according to any of the preceding claims, **characterised in that**
a. at least one carbon-fibre roving in the cured matrix material is under tensile stress or compressive stress, or
b. various carbon-fibre rovings are under different degrees of compressive stress or different degrees of tensile stress.

6. Sensor according to claim 5, **characterised in that**
a. carbon-fibre filaments of a carbon-fibre roving comprise intended breaking points at different points, or
b. carbon-fibre filaments of different carbon-fibre rovings comprise intended breaking points at different points.

7. Sensor according to any of claims 1 to 6, **characterised in that** the sensor is integrated into the fibre composite material of a component made of fibre composite material.

8. Sensor according to any of the preceding claims, **characterised in that** the sensor is arranged on the surface of a component such that tensile stresses on the component are transmitted to the sensor.

9. Method for producing a sensor consisting of at least one carbon-fibre roving comprising a plurality of carbon-fibre filaments, embedded in a matrix material, **characterised in that** the carbon-fibre roving is treated such that individual carbon-fibre filaments are reduced in their breaking strength at defined intended breaking points of their longitudinal extension and thus form intended breaking points, and **in that** the break limits of at least individual filaments are exceeded by the carbon-fibre roving straining at the defined intended breaking points and the resultant breaking points reclose after the straining, and at least one contact surface for electrically contacting the at least one carbon-fibre roving is exposed after the curing of the matrix material or was exposed during the consolidation such that the contact surface is electrically contactable from outside the matrix material.

10. Method for producing a sensor according to claim 9, **characterised in that**
a. either there is straining at least once beyond the break limit of the defined intended breaking points of the individual filaments of the carbon-fibre roving after said roving is introduced into the matrix material and before the full consolidation thereof,
b. or there is straining at least once beyond the break limits of the defined intended breaking points of the individual filaments of the carbon-fibre roving after said roving is introduced into the matrix material and after the consolidation thereof, but not so far as to exceed the break limit of the cured matrix material.

11. Method for producing a sensor according to either claim 9 or claim 10, **characterised in that** the breaking strength of at least individual carbon-fibre filaments is reduced at defined intended breaking points of their longitudinal extension by the carbon-fibre filaments being weakened by mechanical, electrical, chemical or physical actions on the provided intended breaking points.

12. Method for producing a sensor according to claim 11, **characterised in that** the breaking strength of at least individual carbon-fibre filaments is reduced at defined intended breaking points of their longitudinal extension by means of a laser.

13. Method for producing a sensor according to any of claims 9 to 12, **characterised in that** the intended breaking points are applied to the carbon-fibre rovings in predetermined patterns.

14. Method for producing a sensor according to any of claims 9 to 13, **characterised in that**, before the curing of the matrix material, an electrical wire is introduced into the sensor and extends so as to be spaced apart from and in parallel with at least one carbon-fibre roving of the sensor, but is electrically insulated therefrom.

15. Method according to any of claims 8 to 14, **characterised in that** at least one carbon-fibre roving of the sensor is held under mechanical stress during the curing of the matrix material or **in that** a plurality of carbon-fibre rovings are introduced into the matrix material which are held under different degrees of mechanical stress during the curing of the matrix material.

16. Method according to any of claims 9 to 15, **characterised in that**, after the curing of the matrix material, a calibration process is carried out by the electrical resistance of the sensor being detected according to the strain on the matrix material, the strain not exceeding the break limit of the matrix material and the carbon-fibre roving.

17. Method according to any of claims 9 to 16, **characterised in that** the tensile stress beyond the break limits of at least the defined intended breaking points of the individual filaments of the carbon-fibre roving occurs by loading of the component on which or in which the sensor is arranged.

18. Use of a sensor produced according to the method according to claim 17, **characterised in that** the tensile stress to which the sensor was exposed is determined by resistance measurement or ETDR by subjecting the senor to an increasing tensile stress and establishing how high the tensile sensitivity of the sensor is.

## Revendications

1. Capteur comprenant au moins un stratifil en fibre de carbone, incorporé dans un matériau de matrice, et destiné à mesurer des allongements dans la direction de l'axe longitudinal du stratifil en fibre de carbone, le stratifil en fibre de carbone comprenant une pluralité de filaments en fibre de carbone, **caractérisé en ce que**
- au moins des filaments en fibre de carbone individuels sont réduits en termes de résistance à la rupture par une action mécanique, électrique, chimique ou physique, en des points de rupture définis de leur extension longitudinale et
- au moins des filaments individuels comportent dans la direction de l'axe longitudinal du stratifil en fibre de carbone des points de rupture qui peuvent être refermés en fonction de la contrainte exercée par le matériau,
le capteur possédant au moins une surface de contact destinée à venir en contact électrique avec le statifil en fibre de carbone depuis l'extérieur du matériau de matrice.

2. Capteur selon la revendication 1, **caractérisé en ce qu'**un appareil de mesure de résistance électrique est en contact avec le capteur aux deux extrémités.

3. Capteur selon la revendication 1, **caractérisé en ce qu'**un conducteur électrique, qui peut être mis en contact électrique en au moins un point depuis l'extérieur du matériau composite renforcé par des fibres, s'étend parallèlement à au moins un stratifil en fibre de carbone du capteur en étant isolé électriquement de celui-ci.

4. Capteur selon la revendication 3, **caractérisé en ce qu'**un appareil de réflectométrie temporelle électrique est connecté à une extrémité du capteur et à l'extrémité du conducteur électrique proche du capteur.

5. Capteur selon l'une des revendications précédentes, **caractérisé en ce que**
a. au moins un stratifil en fibre de carbone est soumis, dans le matériau de matrice durci, à une contrainte de traction ou une contrainte de compression, ou
b. différents stratifils en fibre de carbone sont soumis à différentes contraintes de compression ou contraintes de traction.

6. Capteur selon la revendication 5, **caractérisé en ce que**
a. des filaments de fibre de carbone d'un stratifil en fibre de carbone comportent des points de rupture à différents endroits, ou
b. des filaments de fibre de carbone de différents stratifils en fibre de carbone comportent des points de rupture à différents endroits.

7. Capteur selon l'une des revendications 1 à 6, **caractérisé en ce que** le capteur est intégré dans le matériau composite renforcé par des fibres d'un composant composite renforcé par des fibres.

8. Capteur selon l'une des revendications précédentes, **caractérisé en ce que** le capteur est disposé sur la surface d'un composant de sorte que les contraintes de traction du composant soient transmises au capteur.

9. Procédé de fabrication d'un capteur comprenant au moins un stratifil en fibre de carbone qui comporte une pluralité de filaments en fibre de carbone incorporés dans un matériau de matrice, **caractérisé en ce que** le stratifil en fibre de carbone est traité de manière à ce que les filaments de carbone individuels soient réduits en termes de résistance à la rupture en des points de rupture définis de leur extension longitudinale et forment ainsi des points de rupture et **en ce que** les limites de rupture au moins de filaments individuels sont dépassées par allongement du stratifil en fibre de carbone aux points de rupture définis et les points de rupture résultants se referment après allongement et, après durcissement du matériau de matrice, au moins une surface de contact destinée à venir en contact électrique avec l'au moins un stratifil en fibre de carbone est exposée ou a été maintenue libre pendant la consolidation de sorte que le contact électrique avec la surface de contact puisse être établi depuis l'extérieur du matériau de matrice.

10. Procédé de fabrication d'un capteur selon la revendication 9, **caractérisé en ce que**
a. soit après l'introduction dans le matériau de matrice et avant la consolidation complète de celui-ci, un allongement est effectué au moins une fois au-delà de la limite de rupture des points de rupture définis des filaments individuels du stratifil en fibre de carbone,
b. ou, après l'introduction dans le matériau de matrice et après la consolidation de celui-ci, un allongement est effectué au moins une fois au-delà des limites de rupture des points de rupture définis des filaments individuels du stratifil en fibre de carbone, mais sans aller au-delà de la limite de rupture du matériau de matrice durci.

11. Procédé de fabrication d'un capteur selon la revendication 9 ou 10, **caractérisé en ce que** la réduction de la résistance à la rupture au moins de filaments individuels en fibre de carbone est effectuée en des points de rupture définis de leur extension longitudinale, **en ce que** les filaments en fibre de carbone sont affaiblis par une action mécanique, électrique, chimique ou physique aux points de rupture prévus.

12. Procédé de fabrication d'un capteur selon la revendication 11, **caractérisé en ce que** la réduction de la résistance à la rupture au moins de filaments individuels en fibre de carbone est effectuée au moyen d'un laser en des points de rupture définis de leur extension longitudinale.

13. Procédé de fabrication d'un capteur selon l'une des revendications 9 à 12, **caractérisé en ce que** les points de rupture sont réalisés suivant des motifs prédéterminés sur le stratifil en fibre de carbone.

14. Procédé de fabrication d'un capteur selon l'une des revendications 9 à 13, **caractérisé en ce qu'**un conducteur électrique est introduit dans le capteur avant le durcissement du matériau de matrice et s'étend à distance parallèlement à au moins un stratifil en fibre de carbone du capteur, tout en étant isolé électriquement de celui-ci.

15. Procédé selon l'une des revendications 8 à 14, **caractérisé en ce qu'**au moins un stratifil en fibre de carbone du capteur est soumis à une contrainte mécanique pendant le durcissement du matériau de matrice ou **en ce que** plusieurs stratifil en fibre de carbone sont introduits dans le matériau de matrice, lesquels sont soumis à différentes contraintes mécaniques pendant le durcissement du matériau de matrice.

16. Procédé selon l'une des revendications 9 à 15, **caractérisé en ce que**, après le durcissement du matériau de matrice, une opération d'étalonnage est effectuée pendant laquelle la résistance électrique du capteur est détectée en fonction de l'allongement du matériau de matrice, l'allongement de la limite de rupture du matériau de matrice et du stratifil en fibre de carbone n'étant pas dépassé.

17. Procédé selon l'une des revendications 9 à 16, **caractérisé en ce que** la contrainte d'allongement exercée sur les limites de rupture au moins des points de rupture définis des filaments individuels du stratifil en fibre de carbone est effectuée sous la contrainte du composant sur lequel ou dans lequel le capteur est disposé.

18. Utilisation d'un capteur fabriqué par le procédé selon la revendication 17, **caractérisée en ce que** la contrainte d'allongement appliquée au capteur est déterminée par mesure de la résistance ou par ECBR dans laquelle on soumet le capteur à une contrainte d'allongement croissante et on détermine la sensibilité à l'allongement du capteur.
